Europäisches Patentamt

European Patent Office

Office européen des brevets

(11) Publication number: **0 246 906**
**A1**

# EUROPEAN PATENT APPLICATION

(21) Application number: **87304553.8**

(22) Date of filing: **21.05.87**

(51) Int. Cl.⁴: **C 10 G 45/04**
**B 01 J 29/02**

(30) Priority: **22.05.86 GB 8612527**

(43) Date of publication of application:
**25.11.87 Bulletin 87/48**

(84) Designated Contracting States:
**BE DE ES FR GB GR IT NL SE**

(71) Applicant: **The British Petroleum Company p.l.c.**
**Britannic House Moor Lane**
**London EC2Y 9BU (GB)**

(72) Inventor: **Atkins, Martin Philip**
**The British Petroleum Company p.l.c. Chertsey Road**
**Sunbury-on-Thames Middlesex, TW16 7LN (GB)**

**Gordon, James William**
**The British Petroleum Company p.l.c. Chertsey Road**
**Sunbury-on-Thames Middlesex, TW16 7LN (GB)**

(74) Representative: **Richardson, Derek et al**
**BP INTERNATIONAL LIMITED Patents & Agreements**
**Division Chertsey Road**
**Sunbury-on-Thames Middlesex TW16 7LN (GB)**

(54) The hydroprocessing of petroleum residues.

(57) Petroleum residues are treated at elevated temperature and pressure in the presence of hydrogen using a catalyst of a layered clay containing one or more hydrogenating metals of the iron group or Group VIB of the Periodic Table of the Elements.

EP 0 246 906 A1

## Description

### THE HYDROPROCESSING OF PETROLEUM RESIDUES

This invention relates to the hydroprocessing of the petroleum residues using layered clay catalysts containing one or more hydrogenating metals.

Petroleum residues, by which is meant petroleum-based material boiling above 350°C, are relatively widely available as compared with lighter petroleum fractions but have little value as such because of their high boiling points and the presence, in them, of sulphur and nitrogen compounds, metals such as vanadium and nickel, and asphaltenes.

In addition to the residue content of normal crude oils, substantial quantities of petroleum residues exist in the form of heavy crude oils and tar sands. Considerable effort has, therefore, been directed in recent years to the hydroprocessing of petroleum residues to reduce their content of sulphur, nitrogen, metals and asphaltenes and so make them more amenable to conversion to lower boiling fractions by catalytic cracking or catalytic hydrocracking. Direct cracking or hydrocracking has also been proposed. The catalysts normally suggested for this duty contain hydrogenating metals of the iron group (i.e. iron, cobalt, nickel and copper) and/or of Group VIB (i.e. chromium, molybdenum and tungsten) supported on an inorganic oxide support (e.g. alumina).

The present invention uses catalysts based on layered clays. Such clays having a lamellar structure with interlamellar spaces disposed between them are known both in natural and synthetic form. The naturally occurring clays of the smectite group include hectorite, chlorite, bentonite, montmorillonite, beidellite and analogues thereof and there are synthetic versions also.

Typical of such clays is montmorillonite which has an idealised stoichiometric composition corresponding to $Na_{0.67}Al_{3.33}Mg_{0.67}(Si_8)O_{20}(OH)_4$. Structurally, it comprises a central layer containing octahedrally coordinated aluminium and magnesium in the form of their oxides and hydroxides sandwiched between two layers containing tetrahedrally coordinated silicon essentially in the form of its oxide. Normally, in nature, cations are present to compensate for the charge imbalance caused by isomorphous substitution of $Mg^{2+}$; for $Al^{3+}$ in the octahedral layer, and/or $Al^{3+}$ or other ions for $Si^{4+}$ in the tetrahedral layers. The octahedral and tetrahedral regions are tightly bound together to form a lamellar layer. The space between these lamellar layers, i.e. the interlamellar space, in natural clays is normally occupied by exchangeable $Ca^{2+}$ or $Na+$ ions. The distance between the interlamellar layers can be substantially increased by absorption of a variety of polar molecules such as water, ethylene glycol, amines etc., which enter the interlamellar space and in doing so push apart the lamellar layers. The interlamellar spaces tend to collapse when the molecules occupying the space are removed, for example by heating the clay at a high temperature.

The alkali metal or alkaline earth metal ions in the interlamellar space can be ion-exchanged for hydrogen ions or other metal ions in known manner.

Because of the tendency of the layered clays described above to collapse at elevated temperatures it has been proposed to insert "pillars" between the lamellar layers. For example, US Patents Nos 4216188 and 4248739 describe stabilised pillared interlayered clays in which the layers are separated and supported by "pillars" of monomeric, oligomeric or polymeric species derived from metal hydroxides. Such clays can inherently possess a higher degree of thermal stability and improved hydrothermal stability when compared with non-pillared layered clays. In USP 4248739 the use of the pillared interlayered clays as sorbents, catalysts and catalyst supports is described. The clays are said to be useful as hydrocarbon conversion catalysts for use in conventional catalytic cracking, hydrocracking, hydrotreating, isomerisation and reforming processes.

In US Patent No. 4,579,832 there is described a hydroprocessing catalyst possessing at least one activity of hydrocracking and hydrogenation, said catalyst comprising:

a cross-linked smectite framework material prepared through interaction of the polyanionic smectite layers with oxygen-containing oligomeric cations, selected from the group of oligomeric hydroxy-metal cations and oxo-metal cations; and

incorporated interlamellar components consisting of preselected combinations of catalytically active transition metal derivatives selected from the group consisting of Mo, Cr, Ni, Co, W and other transition metals, and transition metals being present in the form of metal derivatives selected from the group consisting of oxygen-containing oligomers and oligomeric cations, and cations selected from the group consisting of mononuclear cations and binuclear cations.

One of the advantages of the aforesaid catalysts is stated to be that they are stable at high temperatures in the range of 300°C to 700°C, temperatures generally associated with the hydroprocessing of petroleum residues. The use of pillared clays is consistent with the generally accepted wisdom in the art that layered clays because of their relative lack of thermal stability would be unsuitable for use in relatively high temperature hydroprocessing reactions. Under such conditions the economic penalty of using the very much more expensive pillared clays is generally considered to be acceptable in return for what is perceived to be greater thermal stability.

We have now found that catalysts based on layered clays as opposed to pillared clays can surprisingly be used under the harsh thermal conditions associated with hydroprocessing and, moreover, comparable or better results can be achieved, thereby providing an economic advantage in terms of catalyst costs.

According to the present invention, therefore, a process for the treatment of a petroleum residue at elevated temperature and pressure and in the presence of hydrogen is characterised in that the residue is treated using a catalyst of a layered clay containing one or more hydrogenating metals of the iron group or Group VIB of the Periodic Table of the Elements.

The Periodic Table of the Elements to which reference is made in this specification is the Periodic Table of the Elements as published and copyrighted by Sargent-Welch Scientific Company of Skokie, Illinois. In this Table the Group VIB elements are chromium, molybdenum and tungsten. The term 'iron group' as used throughout this specification is defined as the metals iron, cobalt nickel and copper.

The elevated temperature and pressure may be as follows:

|  | | Broad Range | Preferred Range |
|---|---|---|---|
| Temperature | °C | 300 – 450 | 350 – 425 |
| Pressure | bar(ga) | 10 – 200 | 50 – 150 |

The treatment may be carried out as a batch process, but it is preferably carried out continuously in which case the other process conditions may be

|  | Broad Range | Preferred Range |
|---|---|---|
| Space Velocity v/v hr$^{-1}$ | 0.1 – 4 | 0.2 – 2.0 |
| Hydrogen Gas Flow Rate Nm$^3$/m$^3$ | 100 – 2000 | 500 – 1500 |

The petroleum residue may be an atmospheric residue, a vacuum residue or a product derived from such a residue (e.g. a de-asphalted crude oil) and may be derived from a conventional crude oil, a heavy crude oil or a tar sand.

The treatment normally will involve some reduction in viscosity of the residue. Increasing the severity of the treatment (e.g. increasing the temperature or pressure or decreasing the space velocity) will increase the extent of removal of sulphur, nitrogen, metals and asphaltenes and could also produce some hydrocracking of the hydrocarbons. Increasing the severity would also be expected to decrease catalyst life. Optimum process conditions for any required degree of removal of sulphur etc can readily be determined by experiment.

Petroleum residues are formed of relatively bulky molecules. The sulphur, nitrogen and metals are normally present as complex compounds of carbon, hydrogen and the impurity, and asphaltenes are also bulky hydrocarbonaceous compounds. The choice of layered clay should therefore be directed towards clays with relatively large interlamellar spacing so as to give maximum accessibility of the residue molecules to the catalytic sites.

Thus, the hydrogenating metal is preferably present in ion-exchanged form. The appropriate levels of metal to avoid the formation of an impregnated catalyst can be determined by experiment. Other things being equal, the higher the ion-exchange capacity of the clay, the greater is the quantity of metal that can be accommodated.

Any of the defined hydrogenating metals may be used, but particularly good results have been obtained with molybdenum (in cationic ion-exchanged form) and nickel. It may be particularly desirable to use a combination of an iron group metal and a Group VIB metal.

Suitable layered clays are clays of the smectite type, for example hectorite, montmorillonite and laponite (a synthetic clay produced by Laporte Industries Ltd).

Techniques for cation-exchanging layered clays are conventional in the art. Any such technique may be employed provided that it does not substantially impair the layered structure of the clay. Thus, using the technique of exchange with a solution of the desired cation(s), temperatures in excess of 50°C should be avoided and temperatures of about room temperature are preferred. Likewise, when drying the metal cation-exchanged clay temperatures which substantially impair the layered structure of the clay should be avoided. Suitable drying temperatures are temperatures up to about 100°C.

Alternatively, but less desirably the catalyst may be prepared by impregnation, which generally will result in some cation-exchange.

The process of the present invention will now be further illustrated by reference to the following Examples.

## CATALYST PREPARATION

### Ion-exchange of Layered Clays

The natural clay containing sodium and calcium ions was contacted with a 0.5 M salt solution (10 cm$^3$ solution/g clay) containing the required cation salt. The slurry was stirred for 1 hour at room temperature and the aqueous layer decanted. This process was repeated. The clay was then washed until free of excess ions and dried in air at 100°C for 16 hours. For the production of hydrogen montmorillonite, sulphuric acid was used instead of a salt.

The following ion-exchanged clays were produced in this way using the following acid or salts:-

Hydrogen montmorillonite (Wyoming) $H_2SO_4$

Nickel montmorillonite (Wyoming) $NiCl_2.6H_2O$

Nickel hectorite (California) $NiCl_2.6H_2O$

Nickel Laponite RD $NiCl_2.6H_2O$

Chromium hectorite (California) $CrCl_3.6H_2O$

Iron hectorite (California) $FeCl_2.4H_2O$

Cobalt hectorite (California) $CoCl_2.6H_2O$

Molybdenum hectorite (California) $MoCl_5$

Molybdenum montmorillonite (Texas) $MoCl_5$

Cobalt-molybdenum-hectorite $CoCl_2 + MoCl_5$

Cobalt-molybdenum-Laponite RD $CoCl_2 + MoCl_5$

Copper-hectorite (California)

The metal(s) loading for each of the above catalysts corresponds with the ion-exchange capacity of a fully exchanged clay.

For the cobalt-molybdenum clays 100 cm³ of 0.5MCoCl₂ solution and 100 cm³ of MoCl₅ solution were mixed and then used to ion-exchange 20 g of clay. Otherwise the preparation was as described above.

## Preparation of Aluminium and Zirconia Pillared Clays

100g chlorhydrol was added to 1.2 litres of distilled water. 100 g of Na-montmorillonite was added to the vortex of the vigorously stirred solution. The pH of the slurry was adjusted to 5.5 by addition of dilute ammonia (20 cm³ NH₃ in 200 cm³ H₂O). (Approximately 60 cm³ was added). The slurry was heated up to 65°C ($\pm$3°C) and maintained at this temperature and pH 5.5 for 1 hour with NH₃ added as required. The slurry was left to cool and the stirrer switched off. The aqueous layer was decanted and the clay washed until chloride free, and dried in air at 100°C for 16 hours.

Some of the aluminium pillared clay was impregnated with 3% wt by weight of catalyst of nickel by contacting the clay at room temperature with a solution that contained the required amount of nickel nitrate. The nitrate was decomposed by calcination in air for 2 hours at 200°C and then for 2 hours at 400°C.

A zirconia pillared clay supplied by W.R. Grace & Co. was also impregnated with 3% wt of nickel in the same way as the Al pillared clay.

The invention is illustrated by the following Examples. In all these Examples the feedstock was an atmospheric residue derived from Kuwait crude oil having the following analytical data.

| Density at 15°C | g/cm³ | 0.9722 |
|---|---|---|
| Total Sulphur | % wt | 4.16 |
| Carbon Content (CON) | % wt | 10.3 |
| Asphaltenes | % wt | 3.4 |
| Ni | ppm | 18 |
| V | ppm | 59 |

In all the examples the treatment was carried out using a Baskerville and Lindsay autoclave having a 150 cm³ reaction vessel.

10 g of catalyst were added to 55 g of feed. The reaction vessel was pressured up to 80 bar by the addition of hydrogen. Each reaction took four hours with a warming up time of $1^{1}/_{2}$ hours. The reaction temperature used was 400°C and the reactants were continously stirred at 600 rpm.

Catalyst separation from the products was achieved by ultracentrifugation.

The results obtained were as follows:-

## Examples 1 - 10

Results with layered clays (Product Analysis) are shown in Table 1 below:-

TABLE 1

| Example No | Catalyst | Density at 15°C Kg/l | PRODUCT ANALYSIS Total Sulphur Content % wt | Conradson Carbon residue % wt | Asphaltenes % wt | Ni ppm | V ppm |
|---|---|---|---|---|---|---|---|
| Blank | — | 0.9303 | 4.02 | 9.3 | 4.7 | 10 | 32 |
| Comparative | H+ montmorillonite (Wyoming) | 0.9462 | 3.79 | 9.4 | 2.9 | 7 | 25 |
| 1 | Ni-hectorite (California) | 0.9515 | 3.79 | 14.4 | 3.0 | 77* | 26 |
| 2 | Ni-Laponite RD | 0.9228 | 2.47 | 5.2 | 1.6 | 65* | 13 |
| 3 | Ni-montmorillonite (Wyoming) | 0.9353 | 3.37 | 7.0 | 1.4 | 140* | 9 |
| 4 | Cr-hectorite (California) | 0.9422 | 3.37 | 9.2 | 3.65 | 113* | 28 |
| 5 | Fe-hectorite (California) | 0.9434 | 3.00 | 9.0 | 0.87 | 1 | 3 |
| 6 | Co-hectorite (California) | 0.9563 | 3.50 | 17.1 | 2.7 | 22 | 29 |
| 7 | Mo-hectorite (California) | 0.9274 | 2.72 | 5.5 | 0.62 | 16 | 3 |
| 8 | Cu-hectorite (California) | 0.9495 | 3.33 | 8.6 | 1.4 | 158* | 15 |
| 9 | Mo-montmorillonite (Texas) | 0.9386 | 2.90 | 8.9 | 1.5 | 39* | 18 |
| 10 | Co-Mo-hectorite (California) | 0.9392 | 2.46 | 9.1 | 1.24 | 18 | 8 |
| 11. | Co-Mo Laponite RD | 0.9301 | 2.54 | 6.1 | 0.39 | 6 | 4 |
| Comparative | Commercial Fe-Mo on Al2O3 | 0.9256 | 2.35 | 6.0 | 0.17 | 2 | 3 |

*Ni contamination from catalyst and/or autoclave

Going down Table 1 it will be seen that the result with no catalyst showed little change in the product as compared with the feed, confirming that there was little pure thermal effect. The H+ montmorillonite with no hydrogenating metal also showed only modest removal of sulphur, asphaltenes and metal. Examples 1 - 3 using nickel-exchanged clays showed improved desulphurisation, asphaltene conversion, and vanadium removal. The high figures for Ni content in the product suggest, however, that some nickel my have been leached from the catalysts, possibly by ion-exchange with vanadium in the feed. The nickel-hectorite catalyst result was not particularly good, possibly reflecting the fact that the hectorite used had a relatively low ion-exchange capacity (43.9 meq/100 g as compared with 73.3 for the Laponite RD of Example 2 and 76.4 for the montmorillonite of Example 3). Later Examples with hectorite do show, however, that it is not inherently unsuitable.

Examples 4 to 10 show that other metals are active in promoting desulphurisation and removal of asphaltenes and metals, with molybdenum being particularly beneficial. The results with Co-Mo-layered clays approach those of a commercial Fe-Mo-Al$_2$O$_3$ catalyst.

Comparison Tests 1 and 2

Results with pillared clays - (Product analysis) are shown in Table 2 below:-

TABLE 2

PRODUCT ANALYSIS

| Example No | Catalyst | Density at 15°C Kg/l | Total Sulphur Content % wt | Conradson Carbon residue % wt | Asphaltenes % wt | Ni ppm | V ppm |
|---|---|---|---|---|---|---|---|
| Blank | – | 0.9303 | 4.02 | 9.3 | 4.7 | 10 | 32 |
| Comparative | Al pillared montmorillonite | 0.9634 | 4.29 | 11.2 | 5.2 | 18 | 47 |
| CT 1 | 3% wt Ni on Al pillared montmorillonite | 0.9242 | 2.47 | 8.4 | 0.63 | 208 | 4 |
| CT 2 | 3% wt Ni on Zr pillared montmorillonite | 0.9290 | 2.78 | 6.1 | 0.9 | 765 | 8 |

Table 2 shows that Al-pillared montmorillonite has little activity per se but that activity is significantly increased by the addition of 3% of nickel to the material.

When a catalyst was prepared with 5% wt of nickel on Al-pillared montmorillonite, desulphurisation activity declined to 2.62% S in the product. Silylation of the catalysts of 3% Ni on either Al- or Zr-pillared montmorillonite also decreased desulphurisation activity and asphaltene removal (2.96% S and 3.39% asphaltenes, and 3.46% S and 2.32% asphaltenes respectively). It is postulated that the higher nickel content and the silylation introduced material into the lamellar spaces and so reduced the ability of the residue molecules to enter the catalyst.

Comparison Tests 1 and 2 are not according to the present invention and are included only for the purpose of comparison.

## Claims

1 A process for the treatment of a petroleum residue at elevated temperature and pressure and in the presence of hydrogen is characterised in that the residue is treated using a catalyst of a layered clay containing one or more hydrogenating metals of the iron group or Group VIB of the Periodic Table of the Elements.

2 A process according to claim 1 wherein the petroleum residue is either an atmospheric residue, a vacuum residue or a product derived from such a residue.

3 A process according to claim 2 wherein the petroleum residue is derived from a conventional crude oil, a heavy oil or a tar sand.

4 A process according to any one of the preceding claims wherein the layered clay is a smectite-type clay.

5 A process according to claim 4 wherein the smectite-type clay is either hectorite, montmorillonite or laponite.

6 A process according to any one of the preceding claims wherein the hydrogenating metal is either molybdenum or nickel.

7 A process according to any one of the preceding claims wherein the catalyst contains a mixture of hydrogenating metals which is an iron group metal and a Group VIB metal.

8 A process according to any one of the preceding claims wherein the elevated temperature is in the range from 300 to 450°C.

9 A process according to any one of the preceding claims wherein the elevated pressure is in the range from 10 to 200 bar (ga).

10 A process according to any one of the preceding claims when operated continuously.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 528 982 (B.P.) <br> * Claims 1,2,4-16; page 2, lines 7-11 * <br> --- | 1-10 | C 10 G  45/04 <br> B 01 J  29/02 |
| X | GB-A-1 267 417 (CHEVRON) <br> * Claims 1-6,17-27 * <br> --- | 1-10 | |
| X | US-A-3 887 454 (HICKSON) <br> * Claims 1-7 * <br> --- | 1-10 | |
| X | US-A-4 065 380 (SWIFT) <br> * Claims 1-8 * <br><br> ----- | 1-10 | |

TECHNICAL FIELDS
SEARCHED (Int. Cl.4)

C 10 G
B 01 J

The present search report has been drawn up for all claims

| Place of search | Date of completion of the search | Examiner |
|---|---|---|
| THE HAGUE | 27-08-1987 | MICHIELS P. |

EPO Form 1503 03.82